# FASCICULE DE BREVET EUROPEEN

(11) **EP 0 549 682 B1**
(45) Date de publication et mention de la délivrance du brevet: **21.12.1994**
(21) Numéro de dépôt: 91916979.7
(22) Date de dépôt: 17.09.1991
(51) Int. Cl.: A61C 17/02

(54) **EQUIPEMENT POUR SERINGUE DE PROJECTION DE MELANGES DE FLUIDES, UTILISEE EN PARTICULIER EN ART DENTAIRE**
SPRITZENVORRICHTUNG FÜR FLÜSSIGKEITSMISCHUNGEN, INSBESONDERE FÜR ZAHNÄRZTLICHE ZWECKE
SYRINGE UNIT FOR PROJECTING FLUID MIXTURES, ESPECIALLY FOR USE IN DENTISTRY

(30) Priorité: 20.09.1990 FR 9011605
(43) Date de publication de la demande: 07.07.1993
(73) Titulaire: SAUROU, Michel, F-92400 Courbevoie (FR); RAMSTEINER, Gérard, F-77170 Servon (FR); BAILLY, Alain, F-91700 Sainte-Geneviève-des-Bois (FR)
(72) Inventeur: SAUROU, Michel, F-92400 Courbevoie (FR); RAMSTEINER, Gérard, F-77170 Servon (FR); BAILLY, Alain, F-91700 Sainte-Geneviève-des-Bois (FR)
(74) Mandataire: Sauvage, Renée
(86) Numéro de dépôt international: FR9100730
(87) Numéro de publication internationale: WO9204878

(56) Documents cités:
- EP-A- 0 358 272
- WO-A-90/07912
- DE-A- 1 416 921
- FR-A- 2 621 809
- FR-A- 2 639 534
- US-A- 3 137 297

## Description

La présente invention concerne un équipement pour les seringues de projection de mélanges de fluides utilisées, en particulier, en art dentaire.

A l'heure actuelle, on utilise, pour projeter un mélange d'air et d'eau sur le site d'intervention dentaire, ou l'un des deux fluides seulement, des équipements constitués d'une seringue, de différents modèles, et de canules correspondantes dont l'extrémité libre est introduite dans la bouche du patient. Ces canules qui sont réutilisables sont évidemment souillées lors de l'utilisation et il est impératif de les stériliser après usage.

La tendance, dans le domaine médical en général et dentaire en particulier, est cependant le recours à des outils et ustensiles à usage unique, d'une part, afin de supprimer la nécessité d'une stérilisation fastidieuse après chaque usage et, d'autre part, de sécuriser le patient - et éventuellement le personnel soignant - craignant d'être contaminé par des outils précédemment souillés.

Il a déjà été proposé des équipements constitués d'un adaptateur métallique présentant, vu dans le sens d'écoulement des fluides, une extrémité amont connectable à la seringue et une extrémité aval connectable à une canule jetable, ladite canule définissant au moins deux canaux de distribution de fluide qui s'étendent côte à côte et ledit adaptateur comportant un nombre correspondant de canaux d'alimentation pouvant être mis en relation de communication de fluide avec lesdits canaux de distribution.

Ainsi, FR-A-2 639 534 HEUILLON propose un équipement comportant une canule jetable, dont le matériau constitutif n'est pas précisé, et un adaptateur. Deux canaux d'alimentation de section circulaire sont ménagés côte à côte dans la matière pleine de l'adaptateur qui a également une section circulaire, mais considérablement supérieure à celle des canaux d'alimentation. La canule présente, de son côté, deux canaux de distribution définis par une cavité de section circulaire décroissant rapidement de l'amont à l'aval et divisée diamétralement par une cloison, de sorte que les canaux de distribution ont une section transversale sensiblement hémicirculaire et décroissante. En amont de la cavité, cloisonnée, la canule définit une douille adaptée à recevoir l'extrémité aval de l'adaptateur. Cette extrémité aval est fendue selon un plan diamétral équidistant des deux canaux d'alimentation, fente qui a pour objet d'accommoder la cloison précitée lorsque la canule est enfilée sur l'adaptateur.

Un tel dispositif présente plusieurs inconvénients pour la plupart liés au fait de la différence considérable de section d'écoulement entre l'extrémité aval des canaux d'alimentation et celle, plus de quinze fois supérieure, de l'extrémité amont des canaux de distribution.

Il s'ensuit que :
- jusqu'à ce que l'équilibre soit atteint, l'acheminement des fluides est turbulent et leur sortie, en bout de canule, irrégulière ;
- lorsque l'on projette un liquide, par exemple, de l' eau, il se forme une réserve d'eau dans la canule, de sorte que, lorsque le praticien interrompt l'alimentation en eau, l'écoulement ne cesse pas immédiatement et la canule goutte pour la même raison, si le praticien passe de la projection d'eau à celle d'air, par exemple pour sécher un produit composite, l'air, par effet de Venturi, aspire l'eau résiduelle du canal voisin et c'est de l'air humide qui est envoyé sur la préparation à sécher.

Au surplus, l'effet de turbulence évoqué plus haut risque, par les efforts qui en résultent, de provoquer la désolidarisation intempestive de la canule et de l'adaptateur.

Enfin, il est assez peu vraisemblable que la canule proposée puisse être en matière plastique moulée car on voit mal comment se ferait le démoulage.

Une autre solution a été proposée dans WO90̸/0̸7912 SEGAL. Cette fois, les canaux d'alimentation de l'adaptateur et les canaux de distribution de la canule qui leur correspondent ne sont pas juxtaposés côte à côte, mais coaxiaux. La fabrication de telles canules est compliquée d'autant qu'il est prévu de les munir d'une douille à baïonnette pour leur raccordement sur l'adaptateur en vue d'éviter la désolidarisation évoquée plus haut. Une telle structure demande une fabrication dont le coût est difficilement compatible avec l'obtention d'un article jetable de sorte qu'il est à craindre que, compte tenu du prix, ces canules jetables soient en fait réutilisées.

La présente invention a pour but de rémédier aux inconvénients de l'un et l'autre équipements connus, but qui est atteint en ce sens qu'elle apporte un équipement du type précité, caractérisé en ce que ladite canule est en matière plastique moulée, en ce que lesdits canaux de distribution sont de section constante au moins sur la quasi totalité de la longueur de la canule et en ce que des embouts tubulaires, dits "de sortie", connectés auxdits canaux d'alimentation font saillie depuis la face d'extrémité aval dudit adaptateur, la position relative et les dimensions desdits embouts tubulaires de sortie étant telles qu'ils sont adaptés à être reçus, chacun, dans l'extrémité amont d'un canal de distribution.

Un telle canule peut être fabriquée par moulage par injection dans des conditions extrêmement économiques compatibles avec le caractère jetable recherché pour le produit. La connexion des canaux d'alimentation et des canaux de distribution, au moyen des embouts tubulaires de sortie, s'est révélée être parfaitement satisfaisante, aucune séparation intempestive n'ayant été constatée aux cours des très nombreux essais dont l'équipement selon l'invention a fait l'objet.

D'une manière connue en soi, la canule définit une douille de raccordement dans le fond de laquelle débouche l'extrémité amont des canaux de distribution et cette douille est susceptible de venir s'emboîter sur une partie d'extrémité aval de l'adaptateur. A la différence de l'art antérieur, cependant, au niveau de leur raccordement, la section d'écoulement des canaux d'alimentation est sensiblement égale à la section d'écoulement des canaux de distribution.

Pour faciliter l'orientation mutuelle de la canule et de l'adaptateur au moment de leur raccordement, la face interne de la paroi périphérique de ladite douille et la face externe périphérique de la partie d'extrémité aval de l'adaptateur peuvent présenter, respectivement, une nervure et une rainure axiales de géométries complémentaires, ou inversement, adaptées à venir en prise.

Dans une forme d'exécution préférée, la face interne de la paroi périphérique de la douille présente, au voisinage de son bord libre, une série de projections régulièrement espacées, déformables élastiquement, et la paroi latérale de l'adaptateur présente une gorge périphérique adaptée à recevoir lesdites projections. La venue en prise des projections et de la gorge confirme au praticien qu'il a suffisamment emboîté la canule sur l'adaptateur et élimine, en tant que de besoin, les risques extrêmement faibles de désolidarisation. Les projections étant déformables élastiquement, il suffit au praticien de tirer sur la canule, après usage, pour la séparer de l'adaptateur et la jeter.

Comme on l'a vu plus haut, l'équipement sert en général à projeter un mélange d'air et d'eau et, par suite, la canule définira deux canaux de distribution. On peut cependant concevoir des applications où plus de deux fluides seront projetés auquel cas la canule pourra définir plus de deux canaux.

Les canaux seront généralement juxtaposés parallèlement et, pour que les fluides se mélangent, le profil de l'extrémité aval de l'un au moins des canaux de distribution est tel que le fluide distribué par ce canal converge vers le fluide distribué par l'autre canal.

De préférence, l'extrémité libre de l'un au moins des canaux de distribution est rétrécie pour accroître la pression de projection.

L'adaptateur doit tenir compte des différents modèles de seringues, et différents modèles d'adaptateurs devront donc être prévus : ces modèles auront bien évidemment une partie de géométrie constante, celle qui coopère avec la canule de modèle unique, et une partie de géométrie fonction du modèle de seringue.

Ainsi, dans une première forme d'exécution de l'invention, convenant par exemple aux modèles de seringues Adec et Hanau, l'adaptateur comporte, d'une part, un élément tubulaire d'entrée qui fait saillie depuis la face d'extrémité amont dudit adaptateur et qui est connecté à l'un des canaux d'alimentation, pour acheminer un premier fluide vers l'un des embouts tubulaires de sortie, ledit embout tubulaire d'entrée étant parallèle à l'axe longitudinal de l'adaptateur et, d'autre part, un passage d'entrée pour un second fluide débouchant, d'une part, dans la face d'extrémité amont dudit adaptateur et, d'autre part, dans un autre canal d'alimentation connecté à l'autre embout tubulaire de sortie, ledit passage d'entrée faisant un angle avec l'axe longitudinal de l'adaptateur.

Dans une autre forme d'exécution, convenant par exemple aux seringues Lucciani, l'adaptateur comporte deux embouts tubulaires d'entrée et un détrompeur parallèles à l'axe longitudinal de l'adaptateur et faisant saillie depuis la face d'extrémité amont de ce dernier, les deux embouts d'entrée étant en communication de fluide, chacun, avec un embout tubulaire de sortie et le détrompeur pénétrant dans un passage en cul-de-sac ménagé dans l'adaptateur.

De préférence, dans ce modèle, l'adaptateur est constitué d'un manchon dont la géométrie et les dimensions extérieures sont adaptées à en permettre la réception dans la douille de la canule et d'un noyau dans lequel sont ménagés les canaux d'alimentation munis de leurs embouts tubulaires.

D'autres caractéristiques et avantages de l'invention ressortiront de la description qui va suivre, faite en référence aux dessins annexés dans lesquels :
- la figure 1 est une vue en coupe longitudinale de l'équipement selon une première forme d'exécution de l'invention,
- les figures 2a et 2b représentent, à plus petite échelle, en coupe longitudinale et à l'état séparé, les composants de la forme d'exécution de la figure 1,
- la figure 3 est une vue en coupe longitudinale de l'équipement selon une deuxième forme d'exécution de l'invention,
- les figures 4a, 4b et 4c représentent, à plus petite échelle, en coupe longitudinale et à l'état séparé, les composants de la forme d'exécution de la figure 3, canule exceptée puisque identique à celle de la figure 2b.

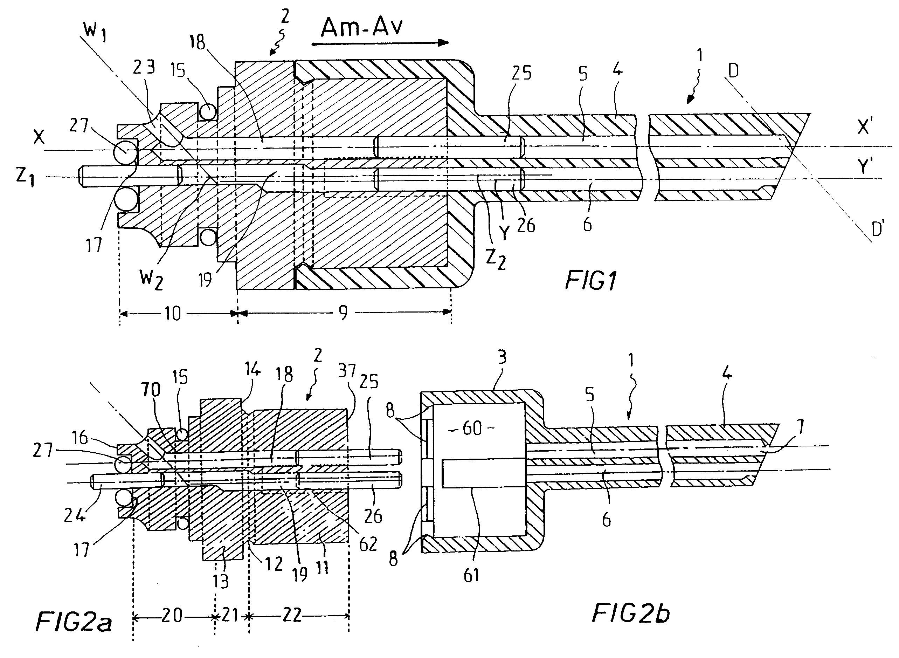

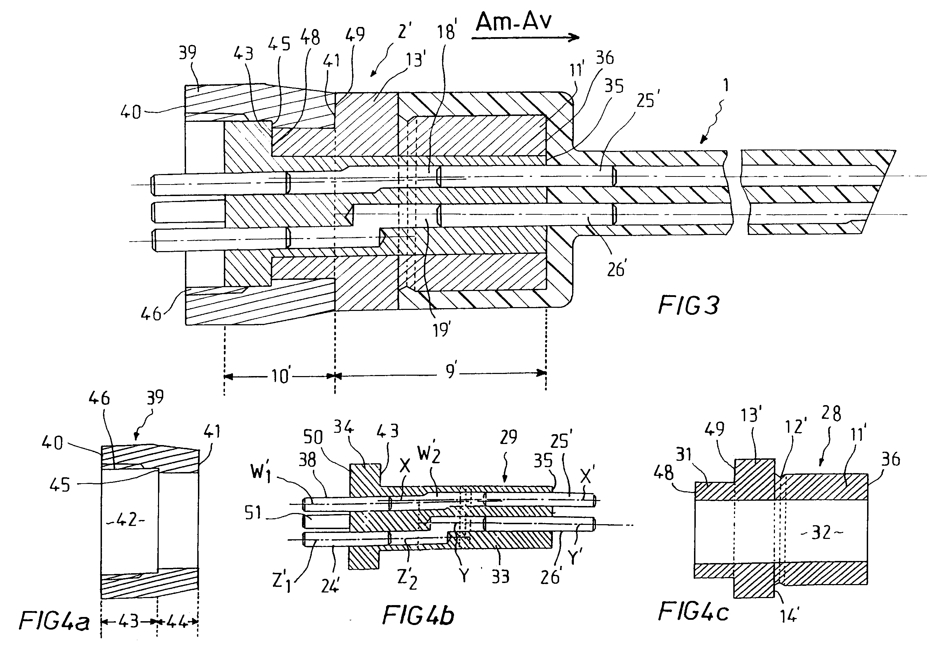

Avant toute chose, rappelons que dans la présente description et les revendications, les termes amont et aval utilisés se réfèrent à la direction d'écoulement des fluides indiquée par la flèche Am-Av aux figures 1 et 3.

Si l'on se réfère aux figures 1, 2a et 2b, on voit que l'équipement, dans sa première forme d'exécution, est composé d'une canule 1 emboîtée sur un adaptateur 2.

Plus précisément, la canule 1, qui est en matière plastique moulée présentant une certaine élasticité, est constituée d'une douille 3 offrant une cavité cylindrique 60̸ et d'une tige 4 dans laquelle sont ménagés deux canaux de distribution 5 et 6 juxtaposés et parallèles et dont la section circulaire est constante sur la quasi totalité de leur longueur. L'extrémité libre de la tige 4 est biseautée. L'extrémité du canal 5 opposée à la douille 3 est rétrécie selon un profil 7 tel que le jet de fluide projeté depuis ce canal 5 est devié de l'axe longitudinal X-X' dudit canal 5 selon une direction D-D' convergeant vers l'axe longitudinal Y-Y' du canal 6. L'extrémité du canal 6 opposée à la douille 3 est également rétrécie pour accroître la pression de sortie. Au voisinage immédiat de son bord libre, la douille 3 est pourvue, sur sa face interne, d'une série de projections 8 déformables élastiquement.

La paroi interne de la douille 3 présente une nervure axiale 61 adaptée à pénétrer dans une rainure 62 axiale prévue sur la paroi de l'adaptateur 2 pour permettre une orientation mutuelle convenable et rapide des deux pièces.

L'adaptateur 2 est une pièce métallique usinée ayant une partie 9 de géométrie extérieure standard pour le raccordement à la canule 1 et une partie 10̸ de géométrie extérieure spécifique pour le raccordement à une seringue de modèle donné, par exemple Adec ou Hanau.

Si l'on entre dans les détails, on voit que la partie standard est constituée d'un bloc 11 cylindrique dont les dimensions correspondent à celles de la cavité 60̸ de la douille 3 de sorte que ce bloc 11 s'y adapte parfaitement, la face d'extrémité aval 37 de l'adaptateur venant s'appliquer contre le fond de la douille 3. Le bloc 11 présente une gorge périphérique 12 adaptée à recevoir les projections 8 de la canule 1. Au delà de la gorge 12, en allant vers l'amont, le bloc présente une zone de plus grand diamètre 13 qui définit un épaulement 14 contre lequel vient buter le bord libre de la douille 3.

La partie spécifique 10̸ de l'adaptateur 2 présente une gorge périphérique 70̸ dans laquelle est logé un joint torique 15, tandis que la face d'extrémité 16 amont détermine une cavité cylindrique 17.

L'adaptateur 2 est traversé de deux canaux d'alimentation 18 et 19 en fluides. L'axe longitudinal du canal d'alimentation 18 se confond sur toute sa longueur avec celui X-X' du canal de distribution 5 de la canule 1 lorsque celle-ci est en place sur l'adaptateur 2.

Par contre, le canal d'alimentation 19 comporte :
- une partie amont 20̸ dont l'axe longitudinal Z1-Z2 se confond avec l'axe longitudinal de la cavité cylindrique 17 mais non avec l'axe Y-Y' du canal de distribution 6 de la canule 1,
- une partie aval 22 dont l'axe longitudinal se confond avec ledit axe Y-Y', et
- une partie intermédiaire 21 de fusion entre les parties 20̸ et 22.

Cette configuration a évidemment pour but de compenser la différence d'axe entre la seringue venant se monter sur l'adaptateur 2 et la canule standard 1.

Le canal d'alimentation 18 est en communication avec l'extérieur, côté amont, via un passage d'entrée 23 dont l' axe longitudinal W1-W2 fait un angle avec l'axe X-X'.

Un embout tubulaire d'entrée 24 est immobilisé dans l'extrémité amont du canal d'alimentation 19 par pénétration partielle dans ledit canal, tandis que des embouts tubulaires de sortie 25 et 26 sont respectivement immobilisés, de la même manière, dans l'extrémité aval des canaux d'alimentation 18 et 19. Les embouts d'entrée 24 et de sortie 25 et 26 se projettent donc depuis respectivement les faces d'extrémité amont et aval de l'adaptateur 2.

Un joint torique 27 est logé autour de l'embout tubulaire d'entrée 24 dans la cavité cylindrique 17.

L'embout tubulaire d'entrée 24 et le passage d'entrée 23 permettent le raccordement de fluides avec la seringue, et les embouts tubulaires de sortie 25 et 26, dont le diamètre est tel qu'ils peuvent être introduit légèrement à force dans les canaux de distribution 5 et 6, assurent la communication de fluides avec la canule 1.

Lorsque l'on désire projeter un mélange d'air et d'eau à l'aide de l'équipement selon l'invention, l'air est admis par le passage d'entrée 23 et le canal d'alimentation 18, et l'eau, via le canal d'alimentation 19. Le profil 7 de l'extrémité libre du canal de distribution 5 contraint le jet d'air à percuter le jet d'eau émergeant du canal de distribution 6 et à se mélanger avec lui.

On comprend, de la description qui précède, que la partie 10̸ de l'adaptateur métallique 2 est conçue pour être réunie à une seringue par l'intermédiaire de laquelle la distribution de fluides est commandée, les joints 15 et 27 assurant l'étanchéité du raccordement. La partie 9 de l'adaptateur reçoit et retient, notamment grâce à la venue en prise des projections élastiquement déformables 8 et de la gorge 12, la canule 1 jetable, l'étanchéité et une retenue complémentaire étant assurées par la pénétration légèrement à force de la partie saillante des embouts 25 et 26 dans les canaux de distribution 5 et 6, pénétration rendue possible par le caractère au moins légèrement élastique de la matière de la canule.

La deuxième forme d'exécution des figures 3 et 4a-c se distingue essentiellement de celle qui vient d'être décrite par la composition en plusieurs parties de l'adaptateur et par l'emplacement de l'accès, côté amont, aux canaux d'alimentation dudit adaptateur.

Les pièces de la deuxième forme d'exécution qui sont identiques à celles de la première forme seront désignées par les mêmes références et ne seront pas décrites à nouveau, tandis que les pièces similaires seront désignées par les mêmes références mais suivies du signe "prime".

Comme on le voit, l'adaptateur 2' est constitué d'un manchon 28 et d'un noyau 29.

Le manchon 28 comporte une partie standard 9' et une partie spécifique 10̸'. La partie standard détermine un bloc 11', dans lequel est ménagée une gorge périphérique 12', et une zone de plus grand diamètre 13' formant un épaulement 14' contre lequel vient buter le bord libre de la douille 3 de la canule standard 1. La partie spécifique 10̸' est constituée par un bloc cylindrique 31 de plus petit diamètre que la partie 13'. Le manchon 28 détermine une cavité cylindrique 32 de diamètre constant.

Le noyau 29 est composé, d'une part, d'un corps cylindrique 33 dont le diamètre externe correspond, au jeu d'introduction près, au diamètre interne de la cavité 32 du manchon 28 et, d'autre part, une partie cylindrique 34 de plus grand diamètre déterminant un épaulement 43. La longueur du corps cylindrique 33 est telle que, lorsque le noyau est enfilé dans le manchon 28 jusqu'à ce que l'épaulement 43 vienne en butée contre la face d'extrémité amont 48 du manchon 28, la face d'extrémité aval 35 du noyau 29 affleure celle 36 du manchon 28. Ces faces d'extrémité 35 et 36 correspondent ensemble à la face d'extrémité 37 de l'adaptateur 1 et, comme telles, viennent en butée contre le fond de la douille 3 de la canule 1 lorsque les projections 8 de cette dernière sont en prise avec la gorge 12'.

Dans le noyau 29 sont ménagés deux canaux d'alimentation 18' et 19' , chacun en trois parties comme le canal 19, à savoir une partie amont ayant un axe longitudinal, respectivement W1'-W2' et Z1'-Z2',parallèle aux axes X-X' et Y-Y', mais décalé par rapport à ces derniers, une partie aval dont les axes longitudinaux se confondent respectivement avec lesdits axes X-X' et Y-Y', et une partie intermédiaire de fusion. Dans les extrémités amont des canaux d'alimentation 18' et 19' sont immobilisés par pénétration partielle des embouts tubulaires d'entrée, respectivement 38 et 24' et, dans les extrémités aval de ces mêmes canaux, des embouts tubulaires de sortie 25', 26'.

Pour raccorder l'adaptateur 2' à la seringue, par exemple du type Lucciani, et pour retenir le noyau 29 dans le manchon 28, il est prévu un écrou 39 présentant une face d'extrémité amont 40̸, une face d'extrémité aval 41 et une cavité 42. La cavité 42 détermine une zone cylindrique amont 43 et une zone cylindrique aval 44 de plus petit diamètre, la jonction entre les zones 43 et 44 créant un épaulement 45 contre lequel vient s'appliquer la zone périphérique de la butée 43 qui dépasse de la face d'extrémité amont 48 du manchon 28. La lonqueur de la zone cylindrique aval 44 de l'écrou 39 correspond à celle de la partie cylindrique 31 du manchon 28 de sorte que, lorsque la face 43 bute sur les faces 48 et 45, la face d'extrémité aval 41 de l'écrou 39 bute contre la paroi amont 49 de la zone de plus grand diamètre 13' du manchon 28.

La zone cylindrique amont 43 de l'écrou 39 est filetée en 46 ce qui permet son vissage sur la seringue. Lorsque l'adaptateur 2' est ainsi réuni à la seringue, les embouts d'entrée 38 et 24' pénètrent dans des conduits correspondants de la seringue.

Comme on le voit, de la face d'extrémité amont 50̸ du noyau 29 se projettent non seulement les embouts tubulaires d'entrée 38 et 24', mais encore un détrompeur 51 adapté à pénétrer dans un orifice approprié d'orientation prévu dans la seringue.

Bien que, dans la présente description, on se soit référé à la projection de mélanges de fluides, il est bien entendu que l'on peut ne projeter qu'un fluide à la fois, par exemple, de l'air : cela n'est pas lié à l'équipement selon l'invention mais aux possibilités de commande de la seringue.

## Revendications

1. Equipement pour seringue de projection de mélanges de fluides, utilisée en particulier en art dentaire, constitué d'un adaptateur métallique (2, 2') et d'une canule jetable (1), ledit adaptateur présentant, vu dans le sens d'écoulement des fluides, une extrémité amont (10̸, 10̸') connectable à la seringue et une extrémité aval (9, 9') connectable à ladite canule (1), ladite canule (1) définissant au moins deux canaux (5, 6) de distribution de fluide qui s'étendent côte à côte et ledit adaptateur (2, 2') comportant un nombre correspondant de canaux d'alimentation (18, 19 ; 18' , 19') pouvant être mis en relation de communication de fluide avec lesdits canaux de distribution (5, 6), caractérisé en ce que ladite canule (1) est en matière plastique moulée, en ce que lesdits canaux de distribution (5, 6) sont de section constante au moins sur la quasi totalité de la longueur de la canule et en ce que des embouts tubulaires (25, 26; 25', 26') , dits "de sortie", connectés auxdits canaux d'alimentation (18, 19 ; 18', 19') font saillie depuis la face d'extrémité aval (37, 35) dudit adaptateur (2, 2'), la position relative et les dimensions desdits embouts tubulaires de sortie (25, 26 ; 25', 26') étant telles qu'ils sont adaptés à être reçus, chacun, dans l'extrémité amont d'un canal de distribution (5, 6).

2. Equipement selon la revendication 1, dans lequel ladite canule (1) définit une douille (3) de raccordement dans le fond de laquelle débouche l'extrémité amont des canaux de distribution (5, 6), ladite douille (3) étant susceptible de venir s'emboîter sur une partie d'extrémité aval (9, 9') de l' adaptateur (2, 2') , caractérisée en ce que, au niveau de leur raccordement, la section d'écoulement des canaux d'alimentation (18, 19 ; 18', 19') est sensiblement égale à la section d'écoulement des canaux de distribution (5, 6).

3. Equipement selon la revendication 2, caractérisé en ce que la face interne de la paroi périphérique de ladite douille (3) et la face externe périphérique de la partie d'extrémité aval (9, 9') de l'adaptateur (2, 2') présentent, respectivement, une nervure (61) et une rainure (62) axiales de géométrie complémentaire, ou inversement, adaptées à venir en prise.

4. Equipement selon la revendication 2 ou 3, caractérisé en ce que la face interne de la paroi périphérique de la douille (3) présente, au voisinage de son bord libre, une série de projections (8) régulièrement espacées, déformables élastiquement, et en ce que la paroi latérale de l'adaptateur (2, 2') présente une gorge périphérique (12, 12') adaptée à recevoir lesdites projections (8).

5. Equipement selon l'une quelconque des revendications 1 à 4, dans lequel ladite canule (1) définit deux canaux de distribution (5, 6), caractérisé en ce que le profil (7) de l'extrémité aval de l'un au moins des canaux de distribution (5, 6) est tel que le fluide distribué par ce canal converge vers le fluide distribué par l'autre canal.

6. Equipement selon la revendication 5, caractérisé en ce que l'adaptateur comporte, d'une part, un élément tubulaire d'entrée (24) qui fait saillie depuis la face d'extrémité amont dudit adaptateur (2) et qui est connecté à l'un des canaux d'alimentation (19), pour acheminer un premier fluide vers l'un des embouts tubulaires de sortie (26), ledit embout tubulaire d'entrée (24) étant parallèle à l'axe longitudinal de l'adaptateur (2) et, d'autre part, un passage d'entrée (23) pour un second fluide débouchant, d'une part, dans la face d'extrémité amont dudit adaptateur (2) et, d'autre part, dans un autre canal d'alimentation (18) connecté à l'autre embout tubulaire de sortie (25), ledit passage d'entrée (23) faisant un angle avec l'axe longitudinal de l'adaptateur.

7. Equipement selon la revendication 5, caractérisé en ce que l'adaptateur (2') comporte deux embouts tubulaires d'entrée (38, 24') et un détrompeur (51) parallèles à l'axe longitudinal de l'adaptateur et faisant saillie depuis la face d'extrémité amont de ce dernier, les deux embouts d'entrée (38, 24') étant en communication de fluide, chacun, avec un embout tubulaire de sortie (25' , 26') et le détrompeur (51) débouchant dans un passage en cul-de-sac ménagé dans l' adaptateur (2').

8. Equipement selon l'une quelconque des revendications 1 à 6, caractérisé en ce que l'adaptateur est constitué d'un manchon (28) dont la géométrie et les dimensions extérieures sont adaptées à en permettre la réception dans la douille (3) de la canule (1) et d'un noyau (29) dans lequel sont ménagés les canaux d'alimentation (18', 19') munis de leurs embouts tubulaires (38, 24', 25' 26').

## Claims

1. Equipment for a syringe for spraying mixtures of fluids, as used in particular in dentistry, consisting, of a metallic adaptator (2,2') and of a disposable cannula (1), said adaptator having, viewed in the direction of flow of the fluids, an upstream end (10, 10') which can be connected to the syringue and a downstream end (9, 9') which can be connected to said cannula (1), the said cannula (1) defining at least two channels (5, 6) for distribution of fluid, which extend side by side, and the said adaptor (2,2') comprising a corresponding number of supply channels (18, 19; 18', 19') which can be brought into correspondence, for communication of fluid, with the said distribution channels (5, 6), characterised in that the said cannula (1) is made of moulded plastic material, in that the said distribution channels (5, 6) are of constant cross-section at least over almost the whole of the length of the cannula, and in that tubular sleeves (25, 26; 25', 26'), called "outlet" sleeves, connected to the said supply channels (18, 19; 18', 19'), project from the downstream end face (37, 35) of the said adaptor (2, 2'), the relative position and the dimensions of the said tubular outlet sleeves (25, 26; 25', 26') being such that they are designed to be received, each one, in the upstream end of a distribution channel (5, 6).

2. Equipment according to Claim 1, in which the said cannula (1) defines a connection socket (3) in the bottom of which the upstream end of the distribution channels (5, 6) opens out, the said socket (3) being capable of fitting on a downstream end part (9, 9') of the adaptor (2, 2'), characterised in that, at the level of their connection, the flow cross-section of the supply channels (18, 19; 18', 19') is substantially equal to the flow cross-section of the distribution channel (5, 6).

3. Equipment according to Claim 2, characterised in that the inner face of the peripheral wall of the said socket (3) and the outer peripheral face of the downstream end part (9, 9') of the adaptor (2, 2') have an axial rib (61) and an axial recess (62) of complementary geometry, respectively, or vice versa, designed to come into engagement.

4. Equipment according to claim 2 or 3, characterised in that the inner face of the peripheral wall of the socket (3) has, in the vicinity of its free edge, a series of regularly spaced and elastically deformable projections (8), and in that the lateral wall of the adaptor (2, 2') has a peripheral groove (12, 12') designed to receive the said projections (8).

5. Equipment according to any one of Claims 1 to 4, in which the said cannula (1) defines two distribution channels (5, 6), characterised in that the profile (7) of the downstream end of at least one of the distribution channels (5, 6) is such that the fluid distributed via this channel converges on the fluid distributed via the other channel.

6. Equipment according to Claim 5, characterised in that the adaptor comprises, on the one hand, a tubular inlet element (24) which projects from the upstream end face of the said adaptor (2) and which is connected to one of the supply channels (19), in order to convey a first fluid towards one of the tubular outlet sleeves (26), the said tubular inlet sleeve (24) being parallel to the longitudinal axis of the adaptor (2) and, on the other hand, an inlet passage (23) for a second fluid opening, on the one hand, into the upstream end face of the said adaptor (2) and, on the other hand, into another supply channel (18) connected to the other tubular outlet sleeve (25), the said inlet passage (23) forming an angle with the longitudinal axis of the adaptor.

7. Equipment according to Claim 5, characterised in that the adaptor (2') comprises two tubular inlet sleeves (38, 24') and a corrector (51) parallel to the longitudinal axis of the adaptor and projecting from the upstream end face of the latter, the two inlet sleeves (38, 24') each being in fluid communication with a tubular outlet sleeve (25', 26') and the corrector (51) opening into a cul-de-sac passage formed in the adaptor (2').

8. Equipment according to any one of Claims 1 to 6, characterised in that the adaptor consists of a muff (28) whose geometry and outer dimensions are designed to allow it to be received in the socket (3) of the cannula (1), and of a core (29) in which are formed the supply channels (18', 19') provided with their tubular sleeves (38, 24', 25', 26').

## Patentansprüche

1. Spritzvorrichtung für Fluidmischungen insbesondere zu zahnärztlichen Zwecken, die aus einem Adapter (2, 2') aus Metall und einer Einwegkanüle (1) besteht, wobei der Adapter, in der Strömungsrichtung der Fluide gesehen, ein eingangsseitiges Ende (10, 10'), das an die Spritze anschließbar ist, und ein ausgangsseitiges Ende, (9, 9') besitzt, das an die Kanüle (1) anschließbar ist, die Kanüle (1) mindestens zwei Fluidabgabekanäle (5, 6) abgrenzt, die sich nebeneinander erstrecken, und der Adapter (2, 2') eine entsprechende Anzahl von Versorgungskanälen (18, 19; 18', 19') besitzt, die mit den Abgabekanälen (5, 6) in Fluidverbindung gebracht werden können, dadurch gekennzeichnet, daß die Kanüle (1) aus gegossenem Kunststoff besteht, daß die Abgabekanäle (5, 6) mindestens auf fast der ganzen Länge der Kanüle einen konstanten Querschnitt haben und daß Rohreinsätze (25, 26; 23', 26'), Ausgangsrohreinsätze genannt, die an die Versorgungskanäle (18, 19; 18', 19') angeschlossen sind, an der ausgangsseitigen Endfläche (37, 35) des Adapters (2, 2') hervorstehen, wobei die relative Stellung und die Abmessungen der Ausgangsrohreinsätze (25, 26; 25', 26') so gewählt sind, daß sie jeweils in dem eingangsseitigen Ende eines Abgabekanals (5, 6) aufgenommen werden können.

2. Vorrichtung nach Anspruch 1, in der die Kanüle (1) eine Anschlußbuchse (3) abgrenzt, in deren Boden das eingangsseitige Ende der Abgabekanäle (5, 6) mündet, wobei die Buchse (3) auf einen ausgangsseitigen Endteil (9, 9') des Adapters (2, 2') aufgesteckt werden kann, dadurch gekennzeichnet, daß der Strömungsquerschnitt der Versorgungskanäle (18, 19; 18', 19') in Höhe ihres Anschlusses im wesentlichen gleich dem Strömungsquerschnitt der Abgabekanäle (5, 6) ist.

3. Vorrichtung nach Anspruch 2, dadurch gekennzeichnet, daß die Innenseite der Umfangswand der Buchse (3) und die Außenumfangsseite des ausgangsseitigen Endteils (9, 9') des Adapters (2, 2') eine axiale Rippe (61) bzw. eine axiale Nut (62) ergänzender Form oder umgekehrt besitzen, die in Eingriff kommen können.

4. Vorrichtung nach Anspruch 2 oder 3, dadurch gekennzeichnet, daß die Innenseite der Umfangswand der Buchse (3) in Nähe ihres freien Randes eine Reihe von in regelmäßigen Abständen angeordneten, elastisch verformbaren Vorsprüngen (8) aufweist und daß die Seitenwand des Adapters (2, 2') eine Umfangsnut (12, 12') aufweist, die diese Vorsprünge (8) aufnehmen kann.

5. Vorrichtung nach einem der Ansprüche 1 bis 4, in der die Kanüle (1) zwei Abgabekanäle (5, 6) abgrenzt, dadurch gekennzeichnet, daß das Profil (7) des ausgangsseitigen Endes mindestens eines der Abgabekanäle (5, 6) so beschaffen ist, daß das von diesem Kanal abgegebene Fluid auf das von dem anderen Kanal abgegebene Fluid zu konvergiert.

6. Vorrichtung nach Anspruch 5, dadurch gekennzeichnet, daß der Adapter einerseits ein Eingangsrohrelement (24), das an der eingangsseitigen Endfläche des Adapters (2) hervorsteht, an einen der Versorgungskanäle (19) angeschlossen ist, um ein erstes Fluid auf einen der Ausgangsrohreinsätze (26) zu zu befördern, und zur Längsachse des Adapters (2) parallel ist, und andererseits einen Eingangsdurchgang (23) für ein zweites Fluid besitzt, der einerseits in der eingangsseitigen Endfläche des Adapters (2) und andererseits in einem anderen Versorgungskanal (18) mündet, der an den anderen Ausgangsrohreinsatz (25) angeschlossen ist, wobei dieser Eingangsdurchgang (23) mit der Längsachse des Adapters einen Winkel bildet.

7. Vorrichtung nach Anspruch 5, dadurch gekennzeichnet , daß der Adapter (2') zwei Eingangsrohreinsätze (30, 24') und eine Unverwechselbarkeitseinrichtung (51) besitzt, die zur Längsachse des Adapters parallel sind und an dessen eingangsseitigen Endfläche hervorstehen, wobei die beiden Eingangsrohreinsätze (38, 24') jeweils mit einem Ausgangsrohreinsatz (25', 26') in Fluidverbindung sind und die Unverwechselbarkeitseinrichtung (51) in ein im Adapter (2') vorgesehenes Sackloch mündet.

8. Vorrichtung nach einem der Ansprüche 1 bis 6, dadurch gekennzeichnet, daß der Adapter aus einer Muffe (28), deren Form und Außenabmessungen so gewählt sind, daß sie in der Buchse (3) der Kanüle (1) aufgenommen werden kann, und aus einem Kern (29) besteht, in dem die mit ihren Rohreinsätzen (38, 24', 25', 26') versehenen Versorgungskanäle (18', 19') vorgesehen sind.
